# EUROPÄISCHE PATENTSCHRIFT

(11) **EP 1 188 400 B1**
(45) Veröffentlichungstag und Bekanntmachung des Hinweises auf die Patenterteilung: **29.12.2004**
(21) Anmeldenummer: 01115541.3
(22) Anmeldetag: 28.06.2001
(51) Int. Cl.: A47J 31/40

(54) **Magazin für Espresso-Kaffeekapseln**
Magazine for espresso-coffee-cartridge
Magasin pour cartouche de café ou expresso

(30) Priorität: 14.09.2000 DE 20015903 U
(43) Veröffentlichungstag der Anmeldung: 20.03.2002
(73) Patentinhaber: NESTEC S.A., 1800 Vevey (CH)
(72) Erfinder: Eugster, Arthur, 8590 Romanshorn (CH)
(74) Vertreter: Schubert, Siegmar, Dipl.-Ing.

(56) Entgegenhaltungen:
- EP-A- 1 002 490
- US-A- 3 295 998
- US-A- 3 440 951

## Beschreibung

Die Erfindung betrifft ein Magazin für Espresso-Kaffeekapseln mit mindestens einer senkrecht aufstellbaren, im wesentlichen zylindrischen Magazinröhre nach dem Oberbegriff des Anspruchs 1. Ein solchs Magazin ist aus dem Dokument EP 1 002 490 bekannt.

Zur einfachen Handhabung des Füllvorganges der Brühkammer von Espressomaschinen mit Kaffeemehl werden zunehmend bekannte mit vorportioniertem Kaffeemehl gefüllte Espresso-Kaffeekapseln verwendet. Die Espresso-Kaffeekapseln werden industriell konfektioniert, unmittelbar nach dem Mahlvorgang des Kaffeemehls mit diesem dosiert gefüllt und hermetisch verschlossen. Die bekannten Espresso-Kaffeekapseln sind meist aus einer Kunststoffolie tiefgezogen und im wesentlichen in Form eines geraden Kegelstumpfes ausgebildet, wobei die Grundfläche des Kegelstumpfes den Boden der Espresso-Kaffeekapseln bildet. Von dem Boden der Espresso-Kaffeekapsel kann seitlich ein Rand vorstehen, der zur Befestigung einer Metallfolie als Boden dient.

In den Espresso-Kaffeekapseln können jeweils verschiedene Kaffeesorten portioniert sein, um diese einfach aromasicher zu bevorraten. Gegenwärtig sind etwa 10 verschiedene Kaffeesorten in Espresso-Kaffeekapseln im Handel verfügbar. Es hat sich als zweckmäßig erwiesen, die Espresso-Kaffeekapseln mit den verschiedenen Kaffeesorten geordnet in einem Magazin zu bevorraten. Als wesentlicher Bestandteil eines solchen Magazins dient eine im wesentlichen zylindrische, normalerweise vertikal angeordnete Magazinröhre, die nach dem Stand der Technik oben vollständig offen ist und unten eine Entnahmeöffnung aufweisen kann. In der Magazinröhre können mehrere Espresso-Kaffeekapseln übereinander gestapelt werden. Eine Anzahl von beispielsweise 6 Magazinröhren kann nach dem Stand der Technik zu einem Rotationsmagazin zusammengefaßt werden. Es ist aber auch eine Reihe linear nebeneinander angeordneter Magazinröhren denkbar.

In jedem Fall ist bei einem Füllvorgang der Magazinröhren darauf zu achten, daß die Espresso-Kaffeekapseln nur in einer gewünschten Soll-Lage in die Magazinröhre eingebracht werden, auch um die Handhabung bei Entnahme und danach zu erleichtern. Insbesondere sollen nicht einzelne der in eine Magazinröhre eingebrachten Espresso-Kaffeekapseln auf dem Kopf stehen, also mit dem Boden nach oben orientiert sein.

Anschließend kann jeweils eine aus der Entnahmeöffnung einer Magazinröhre entnommene Espresso-Kaffekapsel in eine zu ihrer Aufnahme ausgebildete Brühkammer einer Espressomaschine eingelegt werden. Bei dem Schließen der Brühkammer wird die Espresso-Kaffeekapsel an ihrer Oberseite von einem Wasserzuführungselement durchstoßen. Der Boden der Espresso-Kaffeekapsel ist so ausgebildet, daß er nach Erreichen, bzw. Überschreiten eines vorgegebenen Brühwasserdrucks von beispielsweise ca. 6 bar aufreißt, damit der Brühvorgang erfolgen kann.

Der vorliegenden Erfindung liegt die Aufgabe zugrunde, ein Magazin für Espresso-Kaffeekapseln der eingangs genannten Gattung so auszubilden, daß die Espresso-Kaffeekapseln, ohne größere Aufmerksamkeit zu erfordern, eingebracht werden können, damit sie in ihrer Soll-Lage gestapelt und aus dieser ohne weiteres entnommen und ihrer Verwendung zugeführt werden können.

Diese Aufgabe wird durch die Ausbildung des Magazins mit den in dem Anspruch 1 angegebenen Merkmalen gelöst.

Durch eine Einschublehre mit einer seitlichen Einschuböffnung wird erreicht, daß die Espresso-Kaffeekapsel zwangsläufig richtig in die Magazinröhre eingeführt wird und nicht beispielsweise so, daß sie in der Magazinröhre auf dem Kopf steht, d.h. mit ihrem Boden nach oben weist. Außerdem wird ein bequemes Einführen in die Magazinröhre erzielt, da die Espresso-Kaffeekapsel in der Haube zwangsweise geführt ist. Der Einfüllvorgang der Magazinröhre kann damit ohne große Aufmerksamkeit durchgeführt werden.

Zum besonders exakten Ausrichten der Espresso-Kaffeekapsel in der Einschublehre ist diese als Haube ausgebildet, die im Anschluß an die seitliche Einschuböffnung innen im wesentlichen gleich einer halbseitigen Kapselform geformt ist, die durch einen senkrechten, mittigen Kapselschnitt definiert ist. Diese Haube ist auch ästhetisch ansprechend.

Zu der Anpassung der als Haube ausgebildeten Einschublehre an Espresso-Kaffeekapseln, die einen von ihrem Boden seitlich vorstehenden Rand besitzen, weist die Einschublehre gemäß Anspruch 3 innen eine in Umfangsrichtung verlaufende, zu der Einschuböffnung und nach unten offenen Nut auf, die geeignet ist, den Rand der Espresso-Kaffeekapsel aufzunehmen. Insgesamt ist der Durchmesser der Espresso-Kaffeekapsel an dem Rand am größten und verjüngt sich nach oben in Richtung der Höhe der Espresso-Kaffeekapsel. Deswegen kann auch dann, wenn die Espresso-Kaffeekapsel einen vorstehenden Rand besitzt, die in die Einschublehre eingeführte Espresso-Kaffeekapsel ungehindert, aber geführt selbständig senkrecht nach unten in die Magazinröhre fallen. Bei Bedarf kann sie dann aus der unteren Entnahmeöffnung der Magazinröhre entnommen werden.

Gemäß Anspruch 4 eignet sich die Ausbildung der Magazinröhre mit Einschublehre für eine Anordnung mehrerer, insbesondere 5 - 6 Magazinröhren in Reihe, damit diese jeweils mit Kapseln richtig und geordnet beschickt werden können, wonach jede Magazinröhre nur Kapseln mit einer bestimmten Kaffeesorte bevorratet.

Bei einem Rotationsmagazin sind zu dem gleichen Zweck mehrere, z.B. 6 - 6 Magazinröhren in einem Kreis angeordnet. Das Rotationsmagazin hat den Vorteil, daß die jeweils ausgewählte Magazinröhre, die jeweils Espresso-Kaffeekapseln einer bestimmten Kaffeesorte beinhaltet, an eine vorgegebene Entnahmestelle gedreht werden kann. Diese in dem Rotationsmagazin eingesetzten Magazinröhren sind vorteilhaft mit je einer Einschublehre versehen, die somit einer Magazinröhre sicher exakt zugeordnet ist. Es ist auch statt dessen denkbar, nur eine einzige feststehend an dem Magazin angeordnete Einschublehre für sämtliche Magazinröhren vorzusehen, die zum Befüllen nacheinander unter die Haube drehbar sind, womit also Einschublehren eingespart werden können.

Das Magazin, welches mindestens eine Magazinröhre mit einer Einschublehre aufweist, kann als selbständige Einheit, die unabhängig von einer Espressomaschine senkrecht aufstellbar ist, ausgeführt sein, aber auch in eine Espressomaschine gemäß Anspruch 5 kompakt integriert sein.

Die Erfindung wird im folgenden anhand einer Zeichnung mit sechs Figuren erläutert, woraus sich weitere Vorteile und Merkmale der Erfindung ergeben können. Es zeigt:
- Fig. 1: eine Magazinröhre mit Einschublehre in einer Seitenansicht, teilweise geschnitten,
- Fig. 2: eine Vorderansicht auf die Magazinröhre gemäß Fig. 1,
- Fig. 3: eine Draufsicht auf eine erste Ausführungsform eines Magazins,
- Fig. 4: eine Draufsicht auf eine zweite Ausführungsform eines Rotationsmagazins,
- Fig. 4a: eine Seitenansicht auf die zweite Ausführungsform gemäß Fig. 4 und
- Fig. 5: eine Seitenansicht auf ein Magazin mit mehreren in Reihe angeordneten Magazinröhren.

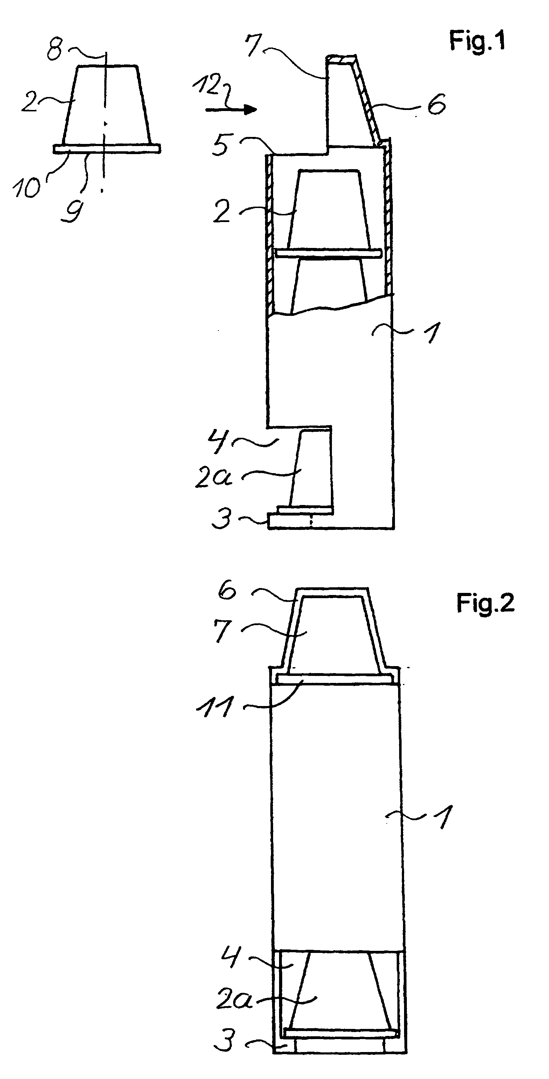

In den Fig. 1 und 2 ist mit 1 eine im wesentlichen zylindrische Magazinröhre bezeichnet, in der mehrere Espresso-Kaffeekapseln 2 wie dargestellt übereinander stapelbar sind. Die Magazinröhre weist im Bereich ihres Bodens 3 eine Entnahmeöffnung 4 auf, aus der jeweils die unterste Espresso-Kaffeekapsel 2a herausgezogen werden kann. An ihrer Oberseite 5 ist die Magazinröhre 1 im Bereich deren Oberseite mit einer als Haube ausgebildeten Einschublehre 6 versehen, die mit der Magazinröhre 1 fest verbunden sein kann.

Die haubenförmige Einschublehre weist eine seitliche Einschuböffnung 7 auf und ist in dem sich daran anschließenden Inneren im wesentlichen gleich einer halbseitigen Kapselform, wie aus der Zeichnung ersichtlich, ausgebildet. Oben ist die Einschublehre verschlossen, was aber nicht unbedingt notwendig ist.

Die Espresso-Kaffekapsel 2 ist um ihre Hochachse 8 rotationssymmetrisch im wesentlichen gerade kegelstumpfförmig ausgebildet. Ein runder Boden 9 der Espresso-Kaffeekapsel 2 ist durch einen radial nach außen stehenden Rand 10 erweitert, wobei der Rand zur Aufnahme eines nicht bezeichneten Verschlußblechs oder Kaffeemehl enthaltenden Espressso-Kaffeekapsel 2 dient. Entsprechend diesem Rand 10 ist die Einschublehre 6, wie aus Fig. 2 ersichtlich, innen an ihrer unteren, in die Magazinröhre 1 übergehende Seite mit einer nach unten offenen Nut 11 versehen, die an der Einschuböffnung 7 endet.

Beim Befüllen des Magazins werden die Espresso-Kaffeekapseln 2 in Richtung des Pfeils 12 in Fig. 1 durch die Einschuböffnung 7 in die Einschublehre eingeschoben, wobei der Rand 10 der Espresso-Kaffeekapsel in die Nut 11 eingeführt wird. In der dann erreichten Endlage liegt die Espresso-Kaffeekapsel halbseitig, d.h. mit ihrer in dem linken oberen Teil der Fig. 1 rechts der Hochachse liegenden Hälfte weitgehend formschlüssig innen an der haubenförmigen Einschublehre 6 an. Dadurch wird die Espresso-Kaffeekapsel über der Oberseite der Magazinröhre exakt ausgerichtet. Beim Loslassen der Espresso-Kaffeekapsel fällt diese gerade nach unten auf den Boden 3 der Magazinröhre oder auf die bereits in ihr enthaltene oberste Espresso-Kaffeekapsel.

Danach können die Espresso-Kaffeekapseln 2a, 2 nacheinander stets geordnet aus der Entnahmeöffnung 4 der Magazinröhren 1 entnommen werden.

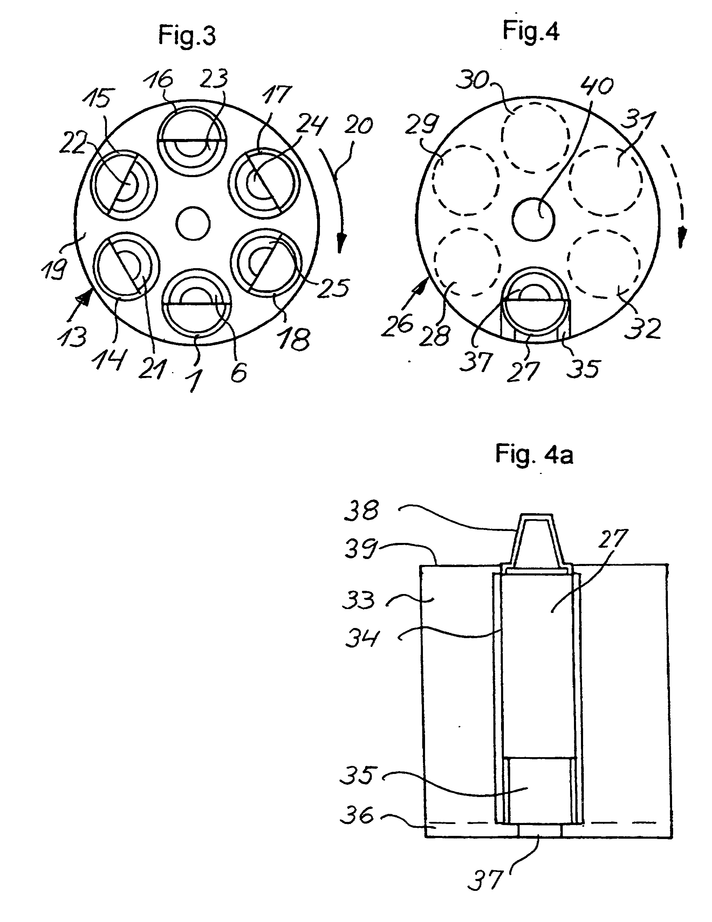

In Fig. 3 ist eine erste Ausführungsform eines Rotationsmagazins 13 in einer Draufsicht gezeigt, welches außer der zylindrischen Magazinröhre 1 gemäß Fig. 1 und 2 fünf weitere Magazinröhren 14-18 aufweist, die in Umfangsrichtung des Rotationsmagazins 13 äquidistant zueinander an einem Träger 19 fest angeordnet sind, insbesondere auf diesem runden Träger 19 sitzen. Der Träger ist mit den Magazinröhren 1, 14-18 in Richtung eines Pfeils 20 drehbar, so daß jede Magazinröhre in eine ausgewählte Stellung eingestellt werden kann. Jede der Magazinröhren 1, 14-18 ist wie die Magazinröhre 1 gemäß den Fig. 1 und 2 ausgebildet, wobei lediglich der Boden 3 durch den gemeinsamen Träger 19 ersetzt sein kann, und oben mit je einer haubenförmigen Einschublehre 6, 21-25 versehen, welche wie die Einschublehre 6 in den Fig. 1 und 2 geformt ist. In einer ausgewählten Drehstellung sind die Entnahmeöffnung 4 der Magazinröhre 1 und die seitliche Einschuböffnung 7 deren Einschublehre 6, siehe Fig. 1 und 2, besonders gut zugänglich; es ist aber gegebenenfalls je nach dem Einbauzustand des Rotationsmagazins 13 auch möglich, die seitlichen Öffnungen der anderen Einschublehren 21-25 und die Entnahmeöffnungen der Magazinröhren 14-18 mehr oder weniger gut zu erreichen, ohne unbedingt eine Verstellung des Rotationsmagazins zu erfordern.

Bei der zweiten Ausführungsform 26 des Rotationsmagazins gemäß den Fig. 4 und 4a sind sechs zylindrische Magazinröhren 27-32 in äquidistantem Umfangsabstand in einem im wesentlichen zylindrischen Gehäuse 33 drehbar angeordnet. Das Gehäuse 33 weist eine schlitzförmige Gehäuseöffnung 34 in seiner zylindrischen Wand auf, die zumindest unten einer Entnahmeöffnung 35 der Magazinröhre 27 entspricht. In Fig. 4a hat ein Sockel 36 in dem Gehäuse 33 ferner einen Ausschnitt 37 zur Entnahme von nicht dargestellten Espresso-Kaffeekapseln aus der Magazinröhre 27, die sich hier in der bevorzugten Darstellung befindet. Wesentlich ist, daß bei dieser Ausführungsform nur eine einzige haubenförmige Einschublehre 38 fest in einer Oberseite 3 des Gehäuses eingelassen ist, und zwar von der Gehäuseöffnung 34 radial nach innen so versetzt, daß sich eine in die bevorzugte Darstellung mit einem Drehknopf 40 gedrehte Magazinröhre, z.B. 27, unter der Einschublehre 38 befindet.

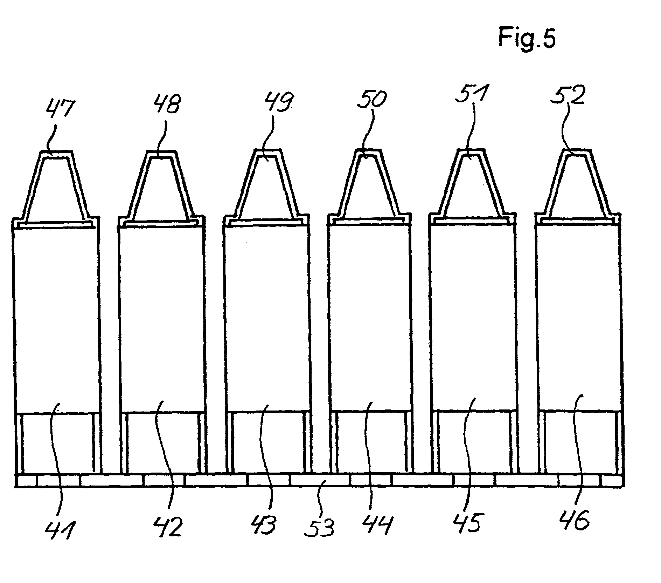

In Fig. 5 ist eine reihenförmige Anordnung von sechs Magazinröhren 41-46 dargestellt, von denen jede oben mit einer haubenförmigen Einschublehre 37-52 versehen ist. In dieser Anordnung sind nicht bezeichnete Entnahmeöffnungen aus einem gemeinsamen Sockel 53 zur gleichen Seite des Sockels hin ausgeformt, wobei der gemeinsame Sockel 53 den Boden 3 in den Fig. 1 und 2 ersetzt. Auch die nicht bezeichneten Ausschnitte der haubenförmigen Einschublehren 37-52 sind zu der gleichen Seite orientiert. Im übrigen entspricht die Ausbildung jeder Magazinröhre 41-46 mit Einschublehre 37-52 derjenigen der Magazinröhre 1 und der Einschublehre 6 in den Fig. 1 und 2.

### Bezugszeichenliste:

- 1: zylindrische Magazinzröhre
- 2: Espresso-Kaffeekapsel
- 2a: Espresso-Kaffekapsel
- 3: Boden
- 4: Entnahmeöffnung
- 5: Oberseite
- 6: Einschublehre
- 7: Einschuböffnung
- 8: Boden
- 10: Rand
- 11: Nut
- 12: Pfeil
- 13: Rotationsmagazin (1. Ausführung)
- 14: weitere Magazinröhre
- 15: "
- 16: "
- 17: "
- 18: "
- 19: Träger
- 20: Pfeil
- 21: Einschublehre
- 22: "
- 23: "
- 24: "
- 25: "
- 26: Rotationsmagazin (2. Ausführung)
- 27: Magazinröhre
- 28: "
- 29: "
- 30: "
- 31: "
- 33: Gehäuse
- 34: Gehäuseöffnung
- 35: Entnahmeöffnung
- 36: Sockel
- 37: Ausschnitt
- 38: Einschublehre
- 39: Oberseite
- 40: Drehknopf
- 41: Magazinröhre
- 42: "
- 42: "
- 43: "
- 44: "
- 45: "
- 46: "
- 47: Einschublehre
- 48: "
- 49: "
- 50: "
- 51: "
- 52: "
- 53: Sockel

## Patentansprüche

1. Magazin für Espresso-Kaffeekapseln mit mindestens einer senkrecht aufstellbaren im wesentlichen zylindrischen Magazinröhre (1), in welche die Espresso-Kaffeekapseln (2, 2a) einer im wesentlichen rotationssymmetrischen, insbesondere gerade kegelstumpfförmigen Form gleitbeweglich passen, die in der Magazinröhre (1) stapelbar sind, wobei insbesondere aus der Magazinröhre (1) unten eine Entnahmeöffnung (4) ausgeformt ist,
**dadurch gekennzeichnet,**
**daß** die Magazinröhre (1) an ihrer Oberseite (5) mit einer Einschublehre (6) ausgestattet ist, die eine seitliche Einschuböffnung (7) aufweist.

2. Magazin nach Anspruch 1,
**dadurch gekennzeichnet,**
**daß** die Einschublehre (6) als Haube ausgebildet ist, die im Anschluß an die seitliche Einschuböffnung (7) innen im wesentlichen gleich einer halbseitigen Kapselform geformt ist, die durch einen senkrechten mittigen Kapselschnitt definiert ist.

3. Magazin nach Anspruch 2,
**dadurch gekennzeichnet,**
**daß** die als Haube ausgebildete Einschublehre (6) innen eine in Umfangsrichtung verlaufende, zu der Einschuböffnung (7) und nach unten offene Nut (11) aufweist, die geeignet ist, einen von dem Boden (9) der Espresso-Kaffeekapsel (2, 2a) seitlich vorstehenden Rand (10) aufzunehmen.

4. Magazin nach Anspruch 2 oder 3,
**dadurch gekennzeichnet,**
**daß** die als Haube ausgebildete Einschublehre (6) oben geschlossen ist.

5. Magazin nach Anspruch 1,
**dadurch gekennzeichnet,**
**daß** es mehrere in Reihe angeordnete Magazinröhren (41-46) mit je einer Einschublehre (47-52) umfaßt.

6. Magazin nach Anspruch 1,
**dadurch gekennzeichnet,**
**daß** es als Rotationsmagazin (26) ausgebildet ist, welches mehrere Magazinröhren (27-32) umfaßt, die nur in einer Drehstellung unter einer fest angeordneten Einschublehre (38) befüllbar sind.

7. Magazin nach einem der vorangehenden Ansprüche,
**dadurch gekennzeichnet,**
**daß** es in einer Espressomaschine integriert ist.

## Claims

1. Magazine for espresso coffee capsules with at least one essentially cylindrical magazine tube (1), which may be positioned vertically and into which the espresso coffee capsules (2, 2a) having an essentially rotationally symmetric, in particular linear, truncated cone-shaped form fit to allow sliding movement, which capsules being stackable in the magazine tube (1), wherein in particular a removal opening (4) is moulded out of the magazine tube (1) at the bottom, **characterised in that** the magazine tube (1) is fitted on its upper side (5) with an insertion guide (6), which has a lateral insertion opening (7).

2. Magazine according to Claim 1, **characterised in that** the insertion guide (6) is configured as a cap, which adjoining the lateral insertion opening (7) is shaped on the inside essentially in the manner of a half capsule form, which is defined by a perpendicular central capsule section.

3. Magazine according to Claim 2, **characterised in that** on the inside the insertion guide (6) configured as a cap has a groove (11), which runs in peripheral direction towards the insertion opening (7) and opens downwards, and which is able to receive an edge (10) projecting laterally from the base (9) of the espresso coffee capsules (2, 2a).

4. Magazine according to Claim 2 or 3, **characterised in that** the insertion guide (6) configured as a cap is closed at the top.

5. Magazine according to Claim 1, **characterised in that** it comprises several magazine tubes (41-46) arranged in a row, each having one insertion guide (47-52).

6. Magazine according to Claim 1, **characterised in that** it is configured as a rotary magazine (26), which comprises several magazine tubes (27-32), which may only be filled in one position of rotation below a fixedly arranged insertion guide (38).

7. Magazine according to one of the preceding claims, **characterised in that** it is integrated in an espresso machine.

## Revendications

1. Magasin pour cartouches de café express comprenant au moins un tube de magasin (1) sensiblement cylindrique, pouvant être installé verticalement, dans lequel s'adaptent avec un mouvement de glissement les cartouches de café express (2, 2a) d'une forme sensiblement symétrique de révolution, en particulier précisément de forme tronconique, qui peuvent être empilées dans le tube de magasin (1), une ouverture de prélèvement (4) étant formée en particulier dans le tube de magasin (1) en bas, **caractérisé en ce que** le tube de magasin (1) est équipé sur son côté supérieur (5) d'un gabarit d'insertion (6), qui présente une ouverture d'insertion (7) latérale.

2. Magasin selon la revendication 1, **caractérisé en ce que** le gabarit d'insertion (6) est conçu comme un capot qui, à la suite de l'ouverture d'insertion (7) latérale est doté intérieurement d'une forme sensiblement identique à une forme de demi-cartouche, qui est définie par une coupe médiane verticale d'une cartouche.

3. Magasin selon la revendication 2, **caractérisé en ce que** le gabarit d'insertion (6) conçu comme un capot présente à l'intérieur une rainure (11) s'étendant dans le sens circonférentiel ouverte par rapport à l'ouverture d'insertion d'insertion (7) et vers le bas, qui est adaptée pour recevoir un bord (10) faisant saillie latéralement depuis le fond (9) de la cartouche de café express (2, 2a).

4. Magasin selon la revendication 2 ou 3, **caractérisé en ce que** le gabarit d'insertion (6) conçu comme un capot est fermé en haut.

5. Magasin selon la revendication 1, **caractérisé en ce qu'**il comprend plusieurs tubes de magasin (41 à 46) disposés en ligne, avec un gabarit d'insertion (47 à 52) par tube.

6. Magasin selon la revendication 1, **caractérisé en ce qu'**il est conçu comme un magasin tournant (26) qui comprend plusieurs tubes de magasin (27 à 32), qui ne peuvent être remplis que dans une position angulaire, sous un gabarit d'insertion (38) disposé de façon fixe.

7. Magasin selon l'une des revendications précédentes, **caractérisé en ce qu'**il est intégré dans une machine à café express.
